# EUROPEAN PATENT SPECIFICATION

(11) **EP 2 918 969 B1**
(45) Date of publication and mention of the grant of the patent: **24.10.2018**
(21) Application number: 14159172.7
(22) Date of filing: 12.03.2014
(51) Int. Cl.: G01B 11/27

(54) **Arrangement and method to align two components of a wind turbine**
Anordnung und Verfahren zur Ausrichtung von zwei Komponenten einer Windturbine
Arrangement et procédé pour aligner deux composants d'une turbine d'éolienne

(43) Date of publication of application: 16.09.2015
(73) Proprietor: Siemens Aktiengesellschaft, 80333 München (DE)
(72) Inventor: Stege, Jason, 7330 Brande (DK)

(56) References cited:
- US-A1- 2005 039 513
- US-A1- 2006 033 908
- US-B1- 6 412 183

## Description

The invention relates to a method and to an arrangement to align a first component and a second component, while they are moved towards each other for their final connection.

Examples for aligning components are known from the prior art. US 2006/0033908 A1 deals with a "rotary borescopic optical dimensional mapping tool". US 6,412,183 B1 deals with a "wheel-alignment", while US 2005/0039513 A1 deals with "aligning equipment in a steel mill".

It is known to use guiding means or aligning means like bolts, pins, cylinders, dove-tails or the like for the alignment of heavy and/or huge components for their connection.

By using alignment means it is possible to move and direct components in a specific position to allow their fixation at each other finally.

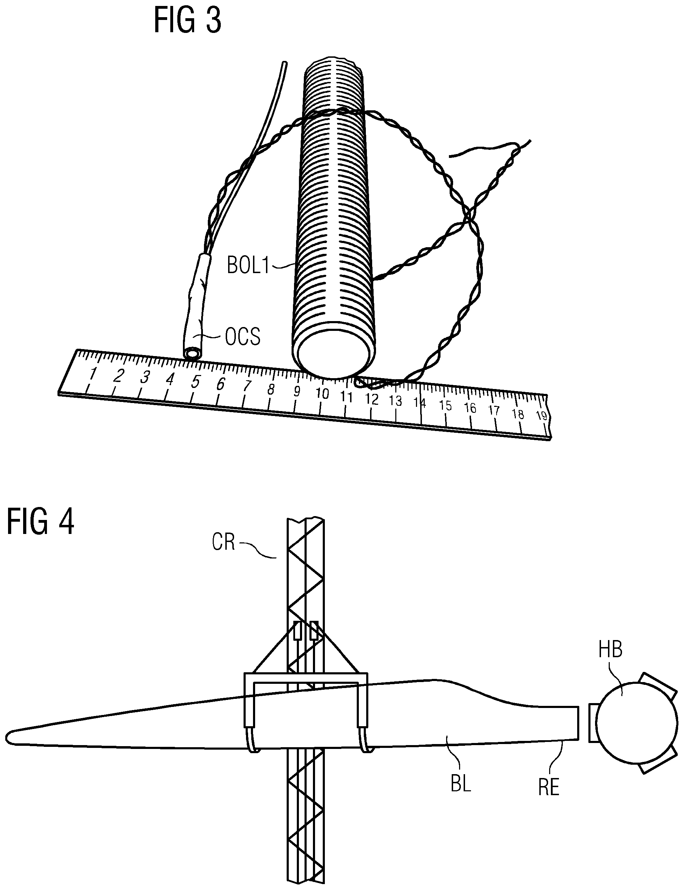

FIG 4 shows one example for this purpose. A wind turbine blade BL is lifted as a first component and in a horizontal orientation by a crane CR.

The crane CR approaches the horizontal blade BL towards the hub HB of a wind turbine, while the hub HB is the second component.

The blade BL might have a weight of several tons and might show a typical diameter of more than 2 meters at its root end RE.

The hub HB might be located at a height of 100 meters and might be connected to a nacelle of the wind turbine. The hub might show a diameter of more than 4 meters and a weight of several tons.

Typically the hub HB as well as the root end RE of the blade BL comprises a flange. The flanges might be ring-shaped for example.

The flanges will be finally connected by threaded bolts and nuts, while a number of bolts will be used as alignment-bolts to guide the blade, when it is moved towards the hub for its final connection there.

For the alignment movement of the blade towards the hub a number of bolts might be already positioned at one of the flanges, i.e. at the flange of the blade.

These bolts are often prolonged in view to those bolts, which will be used to finally fix and connect the blade at the hub.

The blade will be approached step by step to the hub by the crane CR while the prolonged bolts are used as guiding means.

Service personal ensure that the prolonged bolts, being pre-mounted at the flange of the blade, finally slip in allocated holes of the flange of the hub.

The allocated holes are shaped in an adverse manner in reference to the bolts. The holes receive the prolonged bolts.

As soon as the components are in their dedicated position to each other the prolonged bolts are equipped with nuts and the components hub and blade are fixed together step by step.

A set of additional bolts, which are shorter than the prolonged bolts, are used for the final fixation and connection of the components.

The step-by-step movement and the alignment of the components as described above needs to be done quite carefully due to the heavy weight and due to the dimension of the components.

Much time is spent for the controlled movement and for the alignment of the components.
Experienced working personal is needed to perform this movement, alignment and fixation work.

Thus the costs and efforts of the work will be high.

Even the weather conditions, especially the wind speed, might limit the number of possible working-days, which are needed to fix a number of blades with the hub.

Those limitations finally result in additional costs as operation time of the wind turbine might get lost due to bad weather conditions during the erection of the wind turbine.

It is therefore the aim of the invention, to provide an improved method and arrangement for joining and aligning especially huge and heavy components in an easy and cheap manner.

This aim is reached by the features of claim 1 and by the features of claim 7.

Preferred configurations are object of the dependent claims.

According to the invention a first component and a second component are aligned. The first component comprises guiding means and the second component comprises guiding means, while these guiding means are prepared and arranged to interact with each other. The guiding means of the components are prepared and arranged to align the components to each other while the components are moved towards each other for their final connection. The guiding means of the first component comprises an optical camera system, which is used to monitor the change of the position of the guiding means of the second component in reference to the position of the guiding means of the first component. The optical camera system is connected with a remote display enabling working personnel to direct the movement of the components based on the monitored position changes.

In a preferred configuration the guiding means are adverse to each other.

In a preferred configuration the guiding means of the first component protrudes from a joint face of the first component and projects into a joint surface of the second component.

In a preferred configuration the guiding means of the first component comprises a threaded bolt or a bolt or a pin. The guiding means of the second component comprises a drill or a hole or a drilled hole.

In a preferred configuration the optical camera system is integrated and placed into a drilling, which is drilled into the front face of the bolt.

In a preferred configuration the first component comprises fixation means, which is preferably a flange, while the second component comprises fixation means, which is preferably a flange, too. Both flanges, which are preferably ring-shaped, show drill holes for a connection of the first and the second component by threaded bolts and nuts.

In a preferred configuration the flange of the first component comprises at least one bolt, which is used as guiding means of the first component, and the bolt comprises the optical camera system.

In a preferred configuration the bolt, which comprises the optical camera system, is longer than the bolts, which are mainly used to finally connect the first and the second component by threaded bolts and nuts.

In a preferred configuration the first component is a blade of a wind turbine, and the second component is a hub of a wind turbine.

In a preferred configuration the optical camera system is a wireless optical camera system, thus gathered optical information like pictures are transferred in a wireless manner from the optical camera system to the display.

The invention allows the aligning and joining of heavy and/or huge components, like the hub of a wind turbine or the blade of the wind turbine, without direct visual observation of working personnel.

The invention allows an operator to remotely align the components during a lifting operation without direct visual confirmation.

There is no need for the operator to place his head between two massive components during their joining as it is done today.

Preferably the video or a single picture of the video, obtained by the camera system, is transferred to a screen. Thus the pictures of the video can be reversed, mirrored, changed in their size to show details, or can be otherwise altered. Thus the remote controlled movement of the components becomes more intuitive.

The invention can be used for crane-based installation procedures as shown in the figures below. For that kind of installation a typical number of 100 bolts need to be aligned and connected, which is a quite high challenge for the crane operator.

The invention allows an increase in safety in lifting or erection operations in a quite easy manner. The operator, doing remote-controlled component movements, is brought out of any dangerous zones.

The invention delivers best perspective for bolt-and-hole alignments as described herein.

The invention can be implemented and retrofitted into all current systems quite easily and in a cheap manner.

The invention is shown in more detail by figures. The figures show preferred configurations and shall not limit the scope of the idea invented.
- FIG 1: shows the alignment of a first and of a second component, which is done based on the invention,
- FIG 2: refers to Fig 1 and shows one bolt in more detail,
- FIG 3: refers to Fig 2 and shows the size of the optical camera system in reference to the bolt, and
- Fig 4: shows the joining of a wind turbine blade and a hub according to the prior art known and as described in the introduction of the description.

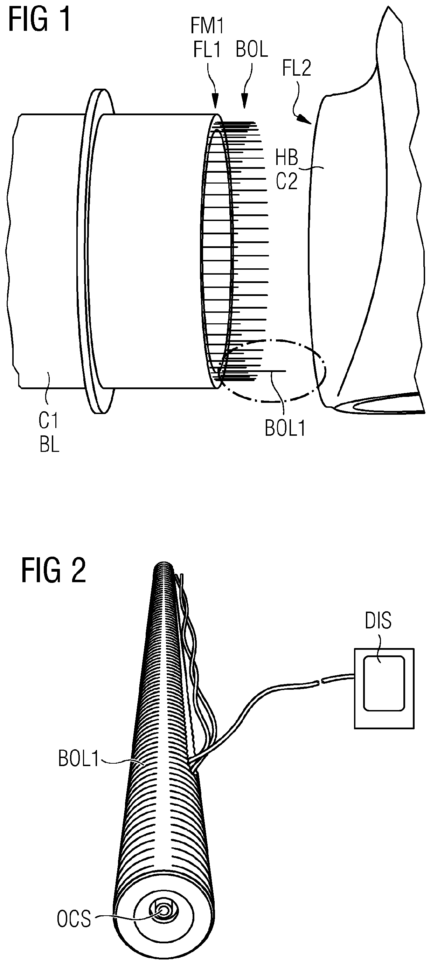

FIG 1 shows the alignment of a first and of a second component, which is done based on the invention.

A blade BL of a wind turbine is approached as first component C1 towards a hub HB of the wind turbine, which is the second component C2 according to the invention.

The blade BL comprises a number of bolts BOL, which are used as guiding means GMC1 of the first component C1.

The bolts BOL are arranged and are pre-mounted at a flange FL1 of the blade BL. The flange FL1 is used as fixation means FM1 of the first component C1.

Accordingly the hub HB comprises as second component C2 also a flange FL2, which is used as fixation means FM2 of the second component C2.

The flange FL2 of the second component C2 comprises holes (not shown in detail), which are used as guiding means GMC2 of the second component C2. They interact with the bolts BOL of the flange FL1 of the first component C1, when the components C1 and C2 are moved towards each other for their final connection.

Thus the guiding means GMC1 and GMC2 are adverse to each other.

The bolts BOL, being pre-mounted at the first flange FL1, and the holes of the second flange FL2 are used for a threaded bolt-nut-connection, as soon as the components C1 and C2 are aligned and are moved towards each other into a dedicated final position for their final connection.

On the bottom of the figure FIG 1 there is one prolonged bolt BOL1, which is marked with a circle. This bolt BOL1 is longer than the other bolts BOL, which are mainly used for the final connection of the components C1 and C2.

This bolt BOL1 is also part of the guiding means GMC1 of the first component C1 and additionally comprises an optical camera system, which is explained in more detail in the next figures.

The bolts BOL of the guiding means GMC1 of the first component C1 protrudes from a joint face of the first component C1 and projects into a joint surface of the second component C2, thus the components C1 and C2 can be aligned and moved towards in a guided manner quite easily.

FIG 2 refers to Fig 1 and shows the bolt BOL1 in more detail. A front face of the bolt BOL1 comprises a drilling, in which an optical camera system OCS is located or arranged.

The optical camera system OCS is used to monitor changes of the position of the guiding means GMC2 of the second component C2 in reference to the position of the guiding means GMC1 of the first component.

The optical camera system OCS is connected with a remote display DIS, which is controlled by working personnel.

Thus the working personnel is enabled to direct the movement of the components C1 and C2 in relation to each other and based on the monitored position changes.

Preferably the optical camera system OCS is a wireless optical camera system, thus gathered optical information like pictures are transferred in a wireless manner from the optical camera system OCS to the display DIS.

FIG 3 shows the size and the diameter of the optical camera system OCS in reference to the diameter of the bolt BOL1.

The optical camera system OCS shows a diameter of approximately 5 mm and a length of approximately 35 mm, while the bolt BOL1 shows a diameter of approximately 22 mm. Based on these camera dimensions it is quite easy to integrate the optical camera system OCS into the bolt BOL1.

## Claims

1. Arrangement to align two components of a wind turbine, which are moved towards each other for their final connection, comprising:
- a blade (C1) of a wind turbine as a first component and a hub (C2) of the wind turbine as a second component,
- wherein the blade (C1) comprises a bolt (BOL) as guiding means and wherein the hub (C2) comprises a hole as guiding means,
- wherein the bolt (BOL) and the hole are prepared and arranged to interact with each other in a way that the blade (C1) and the hub (C2) are aligned to each other while they are moved towards each other for their final connection,
**characterized in**
- **that** the bolt (BOL) of the blade (C1) comprises an optical camera system (OCS), which is used to monitor the change of the position of the hole in reference to the position of the bolt (BOL),
- **that** the optical camera system (OCS) is integrated into a drilling, which is drilled into the front face of the bolt (BOL), and
- **that** the optical camera system (OCS) is connected with a remote display (DIS) enabling working personnel to direct the movement of the components (C1, C2) based on the monitored position changes.

2. Arrangement according claim 1,
- wherein the bolt of the first component (C1) is a threaded bolt, and
- wherein the hole of the second component (C2) is a drilled hole.

3. Arrangement according to one of the previous claims,
- wherein the first component (C1) comprises fixation means (FM1), which is preferably a flange,
- wherein the second component (C2) comprises fixation means (FM2), which is preferably a flange, and
- wherein both flanges, which are preferably ring-shaped, show drill holes for a connection of the first and the second component (C1, C2) by threaded bolts and nuts.

4. Arrangement according claim 3,
- wherein the flange of the first component comprises at least the bolt (BOL), which is used as guiding means of the first component (C1).

5. Arrangement according claim 4, wherein the bolt (BOL),
which comprises the optical camera system (OCS), is longer than the bolts, which are used to finally connect the first and the second component (C1, C2) by threaded bolts and nuts.

6. Arrangement according to one of the previous claims,
wherein the optical camera system (OCS) is a wireless optical camera system, thus gathered optical information like pictures are transferred in a wireless manner from the optical camera system (OCS) to the display (DIS).

7. Method to align two components of a wind turbine, while they are moved towards each other for their final connection,
- while a blade (C1) is a first component of the wind turbine and while a hub is a second component (C2) of the wind turbine,
- wherein a bolt (BOL) of the blade (C1) interacts with a hole of the hub (C2) in a way that the blade (C1) and the hub (C2) are aligned to each other while they are moved towards each other for their final connection,
**characterized in**
- **that** an optical camera system (OCS), which is part of the bolt (BOL), is used to monitor the change of the position of the hole in reference to the position of the bolt (BOL),
- while the optical camera system (OCS) is integrated into a drilling, which is drilled into the front face of the bolt (BOL), and
- **that** the working personnel uses a remote display (DIS), which is connected with the optical camera system (OCS), to direct the movement of the components (C1, C2) based on the monitored position changes.

## Patentansprüche

1. Anordnung zum Ausrichten zweier Komponenten einer Windkraftanlage, die zwecks ihrer abschließenden Verbindung aufeinander zu bewegt werden, umfassend:
- eine Schaufel (C1) einer Windkraftanlage als erste Komponente und eine Nabe (C2) der Windkraftanlage als zweite Komponente,
- wobei die Schaufel (C1) einen Bolzen (BOL) als Führungsmittel umfasst und wobei die Nabe (C2) eine Öffnung als Führungsmittel umfasst,
- wobei der Bolzen (BOL) und die Öffnung derart hergestellt und angeordnet sind, dass sie solcherart miteinander interagieren, dass die Schaufel (C1) und die Nabe (C2) aufeinander ausgerichtet werden, während sie zwecks ihrer abschließenden Verbindung aufeinander zu bewegt werden,
**dadurch gekennzeichnet,**
- **dass** der Bolzen (BOL) der Schaufel (C1) ein optisches Kamerasystem (OCS) umfasst, das zum Überwachen der Veränderung der Position der Öffnung in Bezug auf die Position des Bolzens (BOL) verwendet wird,
- **dass** das optische Kamerasystem (OCS) in eine Bohrung integriert ist, die in die Frontfläche des Bolzens (BOL) gebohrt ist, und
- **dass** das optische Kamerasystem (OCS) mit einer Fernanzeige (DIS) verbunden ist, was es Arbeitspersonal ermöglicht, die Bewegung der Komponenten (C1, C2) basierend auf den überwachten Positionsveränderungen zu führen.

2. Anordnung nach Anspruch 1,
- wobei der Bolzen der ersten Komponente (C1) ein Gewindebolzen ist und
- wobei die Öffnung der zweiten Komponente (C2) eine gebohrte Öffnung ist.

3. Anordnung nach einem der vorhergehenden Ansprüche,
- wobei die erste Komponente (C1) ein Befestigungsmittel (FM1) umfasst, das vorzugsweise ein Flansch ist,
- wobei die zweite Komponente (C2) ein Befestigungsmittel (FM2) umfasst, das vorzugsweise ein Flansch ist, und
- wobei beide Flansche, die vorzugsweise ringförmig sind, Bohröffnungen für eine Verbindung der ersten und der zweiten Komponente (C1, C2) durch Gewindebolzen und Muttern aufweisen.

4. Anordnung nach Anspruch 3,
- wobei der Flansch der ersten Komponente mindestens den Bolzen (BOL) umfasst, der als Führungsmittel der ersten Komponente (C1) verwendet wird.

5. Anordnung nach Anspruch 4, wobei der Bolzen (BOL), der das optische Kamerasystem (OCS) umfasst, länger als die Bolzen ist, die zum abschließenden Verbinden der ersten und der zweiten Komponente (C1, C2) durch Gewindebolzen und Muttern verwendet werden.

6. Anordnung nach einem der vorhergehenden Ansprüche, wobei das optische Kamerasystem (OCS) ein drahtloses optisches Kamerasystem ist, sodass erfasste optische Informationen wie etwa Bilder drahtlos von dem optischen Kamerasystem (OCS) zu der Anzeige (DIS) übertragen werden.

7. Verfahren zum Ausrichten zweier Komponenten einer Windkraftanlage, während sie zwecks ihrer abschließenden Verbindung aufeinander zu bewegt werden,
- während eine Schaufel (C1) eine erste Komponente der Windkraftanlage ist und während eine Nabe eine zweite Komponente (C2) der Windkraftanlage ist,
- wobei ein Bolzen (BOL) der Schaufel (C1) mit einer Öffnung der Nabe (C2) derart interagiert, dass die Schaufel (C1) und die Nabe (C2) aufeinander ausgerichtet werden, während sie zwecks ihrer abschließenden Verbindung aufeinander zu bewegt werden,
**dadurch gekennzeichnet,**
- **dass** ein optisches Kamerasystem (OCS), das Teil des Bolzens (BOL) ist, zum Überwachen der Veränderung der Position der Öffnung in Bezug auf die Position des Bolzens (BOL) verwendet wird,
- während das optische Kamerasystem (OCS) in eine Bohrung integriert ist, die in die Frontfläche des Bolzens (BOL) gebohrt ist, und
- **dass** das Arbeitspersonal eine Fernanzeige (DIS) verwendet, die mit dem optischen Kamerasystem (OCS) verbunden ist, um die Bewegung der Komponenten (C1, C2) basierend auf den überwachten Positionsveränderungen zu führen.

## Revendications

1. Agencement pour aligner deux composants d'une éolienne, lesquels sont rapprochés l'un de l'autre en vue de leur connexion finale, comprenant :
- une pale (C1) d'une éolienne en tant que premier composant et un moyeu (C2) de l'éolienne en tant que second composant ; dans lequel :
- la pale (C1) comprend un boulon (BOL) en tant que moyen de guidage et dans lequel le moyeu (C2) comprend un trou en tant que moyen de guidage ; et dans lequel :
- le boulon (BOL) et le trou sont préparés et agencés de manière à ce qu'ils interagissent l'un avec l'autre d'une façon telle que la pale (C1) et le moyeu (C2) soient alignés l'un par rapport à l'autre tandis qu'ils sont rapprochés l'un de l'autre en vue de leur connexion finale ;
**caractérisé en ce que** :
- le boulon (BOL) de la pale (C1) comprend un système de caméra optique (OCS), lequel est utilisé pour surveiller le changement de position du trou par rapport à la position du boulon (BOL) ; **en ce que** :
- le système de caméra optique (OCS) est intégré à l'intérieur d'un alésage, lequel est alésé à l'intérieur de la face avant du boulon (BOL) ; et **en ce que** :
- le système de caméra optique (OCS) est connecté à un affichage à distance (DIS), ce qui permet que le personnel de travail dirige le déplacement des composants (C1, C2) sur la base des changements de position surveillés.

2. Agencement selon la revendication 1, dans lequel :
- le boulon du premier composant (C1) est un boulon fileté ; et dans lequel :
- le trou du second composant (C2) est un trou alésé.

3. Agencement selon l'une quelconque des revendications précédentes, dans lequel :
- le premier composant (C1) comprend un moyen de fixation (FM1), lequel est de préférence une bride ; dans lequel :
- le second composant (C2) comprend un moyen de fixation (FM2), lequel est de préférence une bride ; et dans lequel :
- les deux brides, qui sont de préférence en forme de bague, présentent des trous alésés pour une connexion des premier et second composants (C1, C2) au moyen de boulons et d'écrous filetés.

4. Agencement selon la revendication 3, dans lequel :
- la bride du premier composant comprend au moins le boulon (BOL), lequel est utilisé en tant que moyen de guidage du premier composant (C1).

5. Agencement selon la revendication 4, dans lequel le boulon (BOL), lequel comprend le système de caméra optique (OCS), est plus long que les boulons qui sont utilisés pour la connexion finale des premier et second composants (C1, C2) au moyen de boulons et d'écrous filetés.

6. Agencement selon l'une quelconque des revendications précédentes, dans lequel le système de caméra optique (OCS) est un système de caméra optique sans fil, et les images sous forme d'informations optiques ainsi collectées sont transférées d'une manière sans fil depuis le système de caméra optique (OCS) à l'affichage (DIS).

7. Procédé pour aligner deux composants d'une éolienne tandis qu'ils sont rapprochés l'un de l'autre en vue de leur connexion finale,
- alors qu'une pale (C1) est un premier composant de l'éolienne et alors qu'un moyeu est un second composant (C2) de l'éolienne ; dans lequel :
- un boulon (BOL) de la pale (C1) interagit avec un trou du moyeu (C2) d'une façon telle que la pale (C1) et le moyeu (C2) soient alignés l'un par rapport à l'autre tandis qu'ils sont rapprochés l'un de l'autre en vue de leur connexion finale ;
**caractérisé en ce que** :
- un système de caméra optique (OCS), qui fait partie intégrante du boulon (BOL), est utilisé pour surveiller le changement de la position du trou par rapport à la position du boulon (BOL) ;
- alors que le système de caméra optique (OCS) est intégré à l'intérieur d'un alésage, lequel est alésé à l'intérieur de la face avant du boulon (BOL) ; et **caractérisé en ce que** :
- le personnel de travail utilise un affichage à distance (DIS), lequel est connecté au système de caméra optique (OCS), pour diriger le déplacement des composants (C1, C2) sur la base des changements de position surveillés.
